# EUROPEAN PATENT SPECIFICATION

(11) **EP 2 256 990 B1**
(45) Date of publication and mention of the grant of the patent: **25.05.2011**
(21) Application number: 10178029.4
(22) Date of filing: 05.12.2005
(51) Int. Cl.: H04L 12/24

(54) **A method for transferring the network management configuration information between the element management systems**
Verfahren zum Transfer der Netzwerkverwaltungs-Konfigurationsinformationen zwischen den Elementverwaltungssystemen
Procédé permettant de transferer des informations de configuration et de gestion de réseau entre des systèmes de gestion des élements

(30) Priority: 06.12.2004 CN 200410096936
(43) Date of publication of application: 01.12.2010
(62) Divisional of application: 05817779.1
(73) Proprietor: Huawei Technologies Co., Ltd., Longgang District, Shenzhen Guangdong 518129 (CN)
(72) Inventor: Yang, Li, Guangdong 518129 (CN)
(74) Representative: Körber, Martin Hans

(56) References cited:
- WO-A-01/82078
- GB-A- 2 328 351
- US-A1- 2003 229 686
- US-A1- 2004 031 030

## Description

### Field of the Invention

The present invention relates to network element management technologies in mobile communication networks, and particularly, to a method and a device for exchanging network management configuration information between element management systems.

### Background of the Invention

In the management architecture of 3rd Generation (3G) mobile communication network, the managed devices at the bottom layer are different network elements, e.g, a Radio Network Controller (RNC), a Base Station (Node B), etc.; the middle layer includes an Element Management System (EMS), and generally in the network of an operator, a group of network elements made by one manufacturer share one EMS and each EMS and the network elements managed by the EMS form a sub-network; the top layer includes a Network Management System (NMS) which usually belongs to one operator and manages a number of sub-networks. The NMS and the EMSs exchange the network management configuration information to each other through communication interfaces.

The sub-networks in the mobile communication network are not separate from each other, but are respectively configured with network management configuration information corresponding to each other, i.e. related configuration information, which is referred to as border configuration information in this disclosure; and the EMS of any sub-network manages the border configuration information of the sub-network.

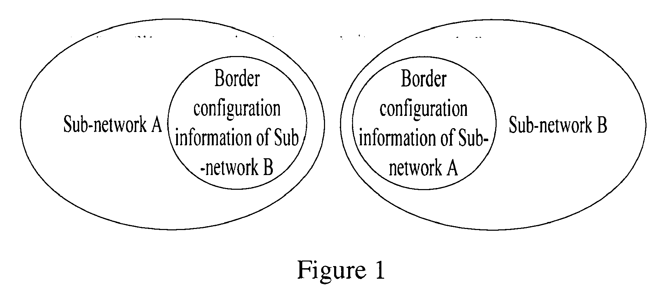

Figure 1 is a schematic diagram illustrating the structure of a network in which each of different sub-networks is configured with border configuration information. As shown in Figure 1, two sub-networks related to each other, i.e. Sub-network A and Sub-network B, need a part of the border configuration information from each other, in other words, Sub-network A has the border configuration information of Sub-network B, and Sub-network B has the border configuration information of Sub-network A. For example, when the two sub-networks are both access networks, if Cell M of Sub-network A and Cell N of Sub-network B are two neighboring cells, Sub-network A needs the border configuration information of Cell N from Sub-network B while Sub-network B needs the border configuration information of Cell M from Sub-network A, thus a terminal user may switch between the two sub-networks. For another example, when one of the two sub-networks is a core network and the other is an access network, both of the two sub-networks need the configuration information of an Iu-cs interface link connecting an MSC server to the RNC or BSC and an Iu-ps interface link connecting an SGSN to the RNC or BSC (i.e. the IucsLink and IupsLink) between the two sub-networks; if Sub-network A modifies the configuration of either link, Sub-network B should modify the configuration of the same link to assure the normal interaction between the two sub-networks.

Border configuration information of related sub-networks should correspond to each other, i.e. should comply with a "mapping" relation as referred to herein, in other words, the border configuration information of related sub-networks should comply with a predetermined function relation. When the border configuration information of a sub-network is modified, corresponding border configuration information in a related sub-network should be also modified according to the predetermined function relation so that the related border configuration information of the two sub-networks always comply with the predetermined function relation to assure that the network functions normally. The modification process is referred to as synchronization herein.

In the field of 3G network management, 3GPP has already defined the technical specifications of the standard communication interface between the NMS and the EMS. The standard communication interface is a northbound interface Itf-N. Through the Itf-N, the NMS sends a management instruction to the EMS, and the EMS sends network management configuration information including network internal event reports to the NMS. Thus the 3G network management is implemented.

However, there is no method for exchanging network management configuration information between EMSs in the industry yet. As a result, when the border configuration information in the EMS of a sub-network is changed, the EMS of a related sub-network can not automatically learn this change. Thus the EMS of the related sub-network can neither automatically acquire the changed border configuration information nor perform automatic synchronization of border configuration information. Therefore manual operation is required in the conventional synchronization of the border configuration information between EMSs, i.e., the changed border configuration information of a sub-network is recorded and then inputted into the EMS of a related sub-network so that the EMS of the related sub-network may synchronize the border configuration information. Such operation is hardly automatic and wastes human and system resources.

A proposal in the prior art suggests that the NMS assists EMSs with synchronization of the border configuration information, however, since the NMS usually can not parse the border configuration information and can hardly screen out the border configuration information needed to send to all related EMSs, thus there is no mature product of the proposal in the industry.

US 2004/0031030 A1 discloses a method and apparatus for facilitating hot upgrades of software components within a telecommunications network device through the use of "signatures" generated by a signature release within the network device. More particularly, it discloses tiered validation of configuration data in which NMS client validates configuration data received from an administrator, and the NMS server and network device re-validate received configuration data respectively. In other words, it provides the synchronization between management system and managed network device.

WO 01/82078 A discloses a method and apparatus for maintaining the integrity of configuration data in redundant fault tolerant network appliances. The appliances interact with one another to detect a failure in one appliance and instantly transition operations form the failed appliance to a functional appliance; further, the configuration data of the network appliances is distributed and stored in a redundant manner in storage system that is accessible to the network appliances.

### Summary of the Invention

Embodiments of the present invention provide a method and a network for exchanging network management configuration information between Element Management Systems (EMS) so that network management configuration information can be exchanged and synchronized automatically between EMSs.

A method for exchanging network management configuration information between Element Management Systems (EMSs) includes:
acquiring, by a first sub-network EMS, network management configuration information of a second sub-network EMS related to the first sub-network EMS sent by the second sub-network EMS after the network management configuration information of the second sub-network EMS is changed;
synchronizing, by the first sub-network EMS, corresponding network management configuration information in the first sub-network EMS according to the network management configuration information of the second sub-network EMS upon receiving the network management configuration information of the second sub-network EMS.

As another aspect of the present, a communication network is provided. The network comprises a first sub-network related to a second sub-network, wherein the first sub-network comprises an EMS communicatively connecting with an EMS of a second sub-network, and the first sub-network EMS is configured to obtain network management configuration information of the second sub-network EMS from the second sub-network EMS, wherein the network management configuration information is sent by the second sub-network after the network management configuration information of the EMS of the second sub-network changes; and is configured to synchronize, after obtaining the network management configuration information of the second sub-network EMS, corresponding network management configuration information in the first sub-network EMS according to the obtained network management configuration information of the second sub-network EMS.

According to the embodiments of the present invention, the automatic transmission of network management configuration information and the automatic border configuration information synchronization between EMSs can be implemented, therefore the correct mapping of border configuration information in all related sub-networks may be maintained in time, and the normal operation of the communication network may be assured.

Because the automatic direct transmission of network management configuration information between EMSs is realized without the participation of the NMS, when there is no NMS, or when the NMS is unable to assist the EMSs with the network management configuration information exchange between the EMSs, the transmission of the configuration information can be performed automatically on the EMS layer. Compared with NMS manufacturers, EMS manufacturers know better about which network management configuration information is needed to be exchanged between the EMSs, the meaning of the network management configuration information exchanged and the influence thereof on the devices in network.

Since the network management configuration information is exchanged directly between the EMSs, the EMS manufacturers are able to set optimized network management configuration information directly in the EMSs so as to improve the management efficiency of the whole network. Furthermore, as the network management configuration information is directly exchanged between the EMSs without the participation of the NMS, the intermediate media of the transmission is reduced and the management speed and reliability are improved.

### Brief Description of the Drawings

Figure 1 is a schematic diagram illustrating the structure of a network in which each of different sub-networks is configured with border configuration information.
Figure 2 is a flow chart of the process in which the local sub-network EMS actively acquires the border configuration information and synchronizes the border configuration information in the local sub-network EMS according to an embodiment of the present invention.
Figure 3 is a flow chart of the process in which the local sub-network EMS actively acquires the border configuration information and synchronizes the border configuration information in the local sub-network EMS according to an embodiment of the present invention.
Figure 4 is a flow chart of the process in which the local sub-network EMS passively receives the border configuration information and synchronizes the border configuration information in the local sub-network EMS according to an embodiment of the present invention.
Figure 5 is a schematic diagram illustrating the 3GPP IRP operation in the embodiments above.

### Detailed Description of the Invention

Embodiments of the present invention are described in detail with reference to accompanying drawings.

The network management configuration information exchanged between the EMSs may be any configuration information, and border configuration information is taken as an example in the description.

In the method for exchanging border configuration information between EMSs in accordance with embodiments of the present invention, the border configuration information may be acquired actively or be received passively.

The manner of acquiring the border configuration information actively is also referred to as "pull" mode.

In the "pull" mode, upon receiving a notification of "network management configuration information synchronization recommended" from a related sub-network EMS of a local sub-network EMS, or upon detecting that the border configuration information of an entity of the related sub-network is incorrect in the local sub-network EMS, the local sub-network EMS actively initiates a request to acquire specified border configuration information from the related sub-network EMS, and the related sub-network EMS replies to the local sub-network EMS with the specified border configuration information.

Upon acquiring the specified border configuration information of the related sub-network EMS, the local sub-network EMS synchronizes the corresponding border configuration information in the local sub-network EMS according to a function relation between the border configuration information of the related sub-network EMS and the corresponding border configuration information in the local sub-network EMS, i.e. the border configuration information of the related sub-network EMS in the local sub-network EMS.

The manner of passively acquiring the border configuration information is referred to as "push" mode.

In the "push" mode, the related sub-network EMS of the local sub-network EMS sends, when its border configuration information is changed, the changed border configuration information to the local sub-network EMS.

Upon receiving the changed border configuration information, the local sub-network EMS synchronizes corresponding border configuration information in the local sub-network EMS according to the function relation between the border configuration information of the related sub-network EMS and the corresponding border configuration information in the local sub-network EMS.

In the process above, either dedicated interface operations newly-defined or existing interface operations can be adopted. The operations of 3GPP northbound interface are adopted in the embodiments of the present invention to further illustrate the technical scheme of the present invention.

An EMS may directly invoke the operations of the 3GPP northbound interface to perform configuration information exchange between the EMSs. However, unlike the prior art, the two parties of the operations are not an EMS and an NMS, but two EMSs.

According to an embodiment of the present invention, the local sub-network EMS actively acquires the border configuration information of the related sub-network EMS and synchronizes the corresponding border configuration information in the local sub-network EMS.

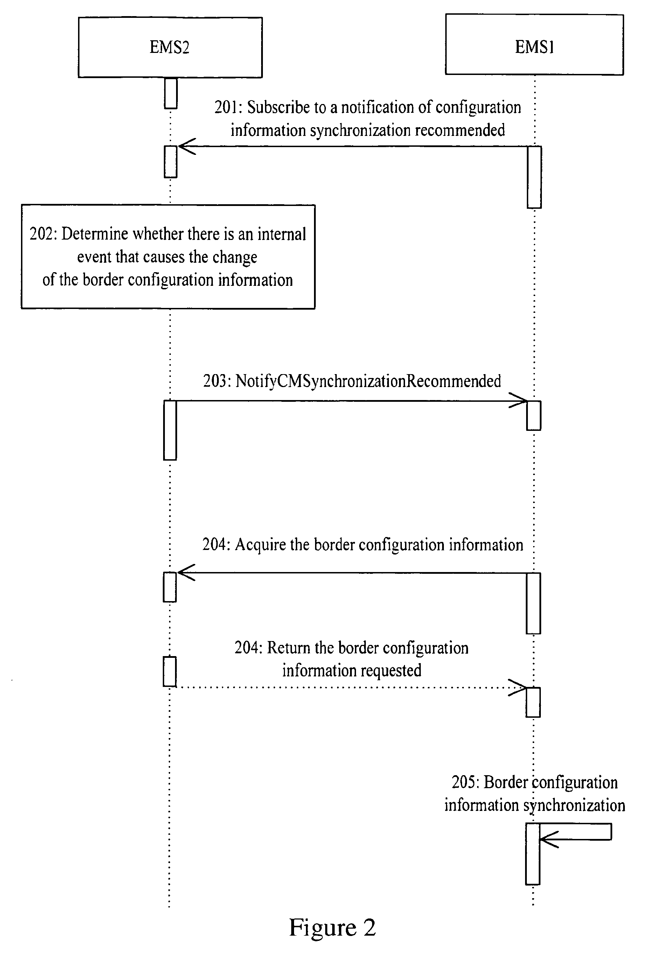

Figure 2 is a flow chart of the process in which the local sub-network EMS actively acquires the border configuration information and synchronizes the border configuration information in the local sub-network EMS according to an embodiment of the present invention. As shown in Figure 2, EMS1 is the local sub-network EMS, EMS2 is an EMS which has corresponding border configuration information of EMS1, and the border configuration information between EMS1 and EMS2 can be configured in advance. The process as shown in Figure 2 is described below.

In Step 201, EMS1 subscribes at EMS2 to a notification of configuration information synchronization recommended.

Step 201 is the basis of Step 202. The subscription means that an EMS requires another EMS to send a notification to it upon a certain event, e.g., the local sub-network EMS may subscribe to a notification of object creation event at a peer EMS, and the peer EMS sends the notification of the object creation event to the local sub-network EMS upon the successful creation of an object.

In this embodiment, the Subscription operation of the Notification Integration Reference Point (IRP) of the 3GPP northbound interface is adopted in Step 201, and unlike the specifications of 3GPP, the Subscription operation and other operations in accordance with the embodiment of the present invention are directly invoked by an EMS on another EMS. In Step 201, EMS1 directly invokes the Subscription operation to subscribe to the notification of configuration information synchronization recommended at EMS2.

In the Subscription operation, EMS1 sends to EMS2 a subscription request carrying the identity of a border configuration object that may be changed and a notification type domain, where the notification type domain records the notification type subscribed to, e.g., it may be a notification of configuration information synchronization recommended (i.e. notifyCMSynchronizationRecommended) at the Kernel Configuration Management IRP (KernelCMIRP) in this embodiment. Upon receiving the subscription request from EMS1, EMS2 confirms the subscription, and records the identity of the border configuration object and the notification type.

The definition of the Subscription operation at the NotificationIRP is provided in 3GPP 32.302 and the definition of the notifyCMSynchronizationRecommended at the KernelCMIRP is provided in 3GPP 32.662, therefore the definitions will not be given herein.

In Step 202, after EMS2 confirms the subscription, Step 203 is performed upon the detection of any event that may cause change of the border configuration information, e.g., the update of part of the border configuration information.

In Step 203, EMS2 sends the notification of configuration information synchronization recommended to EMS1 to recommend EMS1 to synchronize the border configuration information corresponding to the changed border configuration information. The notification of configuration information synchronization recommended carries the identity of the changed border configuration information.

In Step 204, upon receiving the notification of configuration information synchronization recommended, EMS1-learns from the identity of the changed border configuration information that the border configuration information indicated by the identity is changed, and actively acquires the changed border configuration information from EMS2, i.e., EMS1 sends to EMS2 a request including the identity of the changed border configuration information to acquire the changed border configuration information, and EMS2 sends the contents of the changed border configuration information to EMS1 upon receiving the request.

In Step 204 above, an operation of getting Managed Object Attributes (getMOAttributes) at the Basic Configuration Management IRP (BasicCMIRP) can be adopted to initiate a querying request to EMS2 for the attributes of the object corresponding to the changed border configuration information to acquire the changed border configuration information at EMS2. The input parameters of the operation of getMOAttributes include the attributes of the object corresponding to the changed border configuration information. The output parameters of the operation of getMOAttributes include the changed border configuration information of EMS2, and EMS1 acquires the changed border configuration information of EMS2 from the output parameters. The definition of the operation of getMOAttributes at the BasicCMIRP is provided in 3GPP 32.602 and will not be given herein.

In addition, in Step 204 above, EMS1 may also adopt the Upload operation at the Bulk Configuration Management IRP (BulkCMIRP) to request EMS2 to create a file containing the changed border configuration information and send the file to a specified unique data file reference. After the Upload operation, EMS2 sends the file containing the changed border configuration information to EMS1 over the standard file transfer protocol and EMS1 acquires the changed border configuration information from the file. The definition of the Upload operation at the BulkCMIRP is provided in 3GPP 32.612 and will not be given herein.

In Step 205, EMS1 synchronizes the corresponding border configuration information in EMS1 according to the changed border configuration information of EMS2. That is, EMS1 modifies the corresponding border configuration information in EMS 1 according a predetermined function relation between the border configuration information of EMS2 and the corresponding border configuration information in EMS1 so that the corresponding border configuration information in EMS1 and the changed border configuration information of EMS2 still comply with the predetermined function relation, thus ensuring the normal network operation. For example, when an EMS that manages a cell (UtranCell) receives a configuration change notification of a neighboring cell from another EMS, the EMS needs to updates the configuration information of the neighboring cell (ExternalUtranCell) in the EMS.

According to an embodiment of the present invention, the local sub-network EMS also actively acquires the border configuration information of a related sub-network EMS and synchronizes the corresponding border configuration information in the local sub-network EMS.

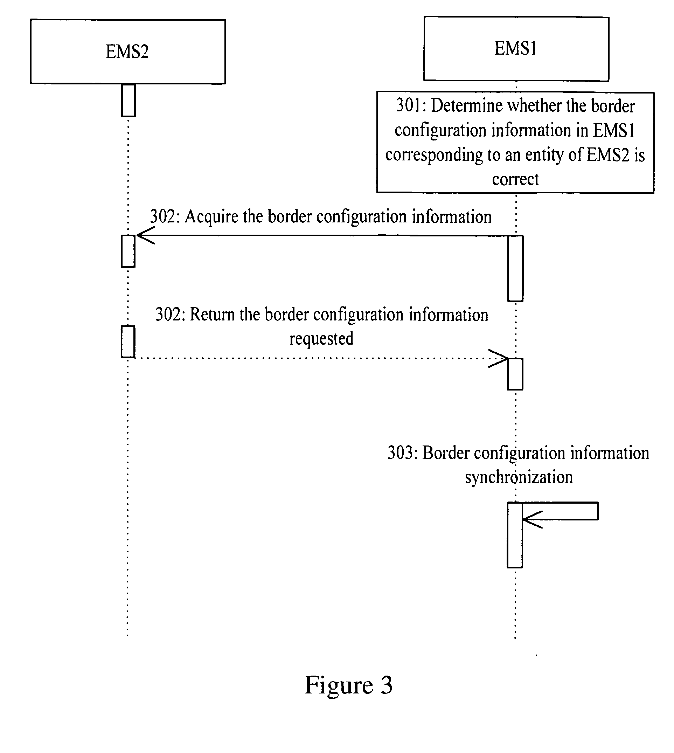

Figure 3 is a flow chart of the process in which the local sub-network EMS actively acquires the border configuration information and synchronizes the border configuration information in the local sub-network EMS according to an embodiment of the present invention. As shown in Figure 3, EMS1 is the local sub-network EMS, and EMS2 is an EMS of a sub-network related to the border configuration information of the local sub-network EMS, i.e. a related sub-network EMS. The process in Figure 3 is described below.

In Step 301, when EMS1 determines that EMS2 does not match corresponding border configuration information in EMS1, Step 302 is performed. For example, when EMS1 finds that communications with EMS2 on a link is failing all the time, EMS1 determines that the configuration information of the link in the two EMSs does not match with each other. The configuration information of the link is one kind of the border configuration information.

In Step 302, EMS1 actively acquires the specified border configuration information from EMS2. That is, EMS1 sends a request to EMS2 to acquire the specified border configuration information, and EMS2 sends the specified border configuration information to EMS1 upon receiving the request. The specified border configuration information is the border configuration information that does not match in Step 301.

In Step 302 above, the operation of getMOAttributes at the BasicCMIRP can be adopted by EMS1 to initiate a querying request to EMS2 for the attributes of the object corresponding to the changed border configuration information to acquire the specified border configuration information of EMS2. The input parameters of the operation of getMOAttributes include the attributes of the object corresponding to the changed border configuration information. The output parameters of the operation of getMOAtri-ibutes include the specified border configuration information of EMS2, and EMS1 acquires the changed border configuration information from the output parameters.

In addition, in Step 302 above, EMS may also adopt the Upload operation at the BulkCMIRP to request EMS2 to create a file containing the changed border configuration information and send the file to a specified unique data file reference. After the Upload operation, EMS2 sends the file containing the changed border configuration information to EMS1 over the standard file transfer protocol and EMS1 acquires the changed border configuration information from the file.

In Step 303, EMS1 synchronizes corresponding border configuration information in itself according to the changed border configuration information of EMS2. That is, EMS1 modifies corresponding border configuration information in itself according to a predetermined function relation between the border configuration information of EMS2 and the corresponding border configuration information in EMS1 such that the corresponding border configuration information in EMS1 and the changed border configuration information of EMS2 still comply with the predetermined function relation, thus ensuring the normal network operation.

According to an embodiment of the present invention, the local sub-network EMS passively receives a notification of border configuration information change from another sub-network EMS, and synchronizes the border configuration information in the local sub-network EMS accordingly. In this embodiment, the local sub-network EMS subscribes to a notification of border configuration object change at a related sub-network EMS. When the related sub-network EMS detects that an object managed by the related sub-network EMS is changed, and if the change of the object causes the change of the border configuration information, the related sub-network EMS sends a notification of attribute value change of border configuration object to the local sub-network EMS subscribing to the notification of border configuration object change. Upon receiving the notification of border configuration object change, the local sub-network EMS modifies corresponding border configuration information saved locally according to the changed border configuration information in the notification of border configuration object change so that the border configuration information in both EMSs is synchronized to assure the normal operation of the network.

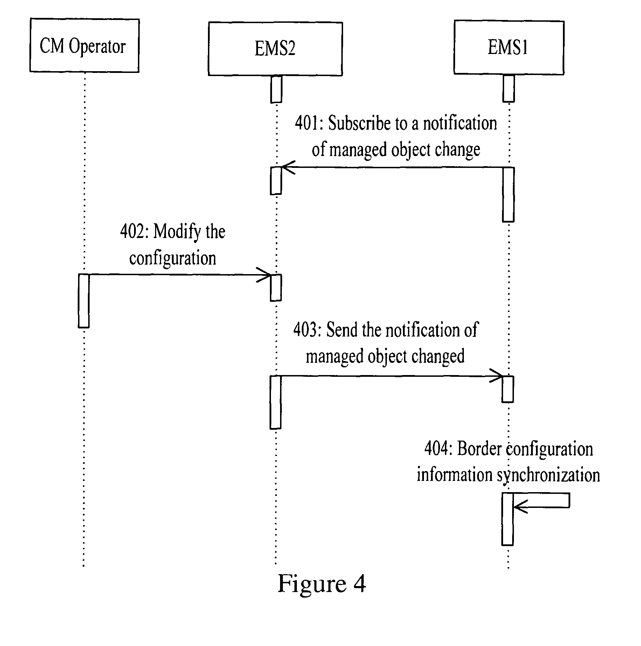

Figure 4 is a flow chart of the process in which the local sub-network EMS passively receives the border configuration information and synchronizes the border configuration information of the local sub-network EMS according to an embodiment of the present invention. As shown in Figure 4, EMS1 is the local sub-network EMS, and EMS2 is an EMS of a sub-network related to the border configuration information of EMS1. The process in Figure 4 is described below.

In Step 401, EMS1 subscribes to the notification of border configuration object change at EMS2. The border configuration object refers to a network resource management object or a management domain control object managed by a sub-network EMS.

Step 401 is the basis of Steps 402 and 403.

In this embodiment, the Subscription operation at the Notification IRP class of the 3GPP northbound interface is adopted to perform Step 401. In Step 401, EMS1 directly invokes the Subscription operation to subscribe to the notification of the border configuration object change at EMS2. The notification of the border configuration object change includes all kinds of notifications that may cause the change of the border configuration object, e.g., object creation notification, object deletion notification and attribute value change notification, etc.

Specifically, in the Subscription operation, EMS1 sends to EMS2 a subscription request carrying the identity of the border configuration object and a notification type domain. The notification type domain records a notification type subscribed to, e.g., object creation, object deletion, attribute value change, etc. EMS2 confirms the subscription, records the identity of the border configuration object and the notification type subscribed to upon receiving the subscription request from EMS 1.

The definition of the Subscription operation at the Notification IRP is provided in 3GPP 32.302 and will not be given herein.

In Step 402, upon confirming the subscription, EMS2 determines whether the border configuration information of EMS2 is changed. In other words, when an event that may cause the change of an object managed by EMS2 occurs in the network, EMS2 determines whether the border configuration object is changed, i.e., whether the border configuration information is changed. Step 403 is performed if the border configuration information is changed.

Generally, a Configuration Management (CM) operator may initiate through a control terminal of EMS2 an operation to change the configuration information of EMS2. The operation that may cause the change of the border configuration information includes the following four.

First, EMS2 sends to a network element managed by itself an instruction to create, delete or modify a border configuration object, and the information of the border configuration object is changed when the instruction is executed successfully.

Second, the local maintenance terminal of a network element managed by EMS2 sends an instruction to the network element to create, delete or modify a border configuration object. The network element reports to EMS2 if the instruction is executed successfully by the network element, and EMS2 determines that the border configuration object is changed.

Third, when the NMS manages, through the BasicCMIRP, EMS2 to create, delete or modify a border configuration object, the border configuration object will be changed. For example, the NMS requests EMS2 through an operation of setMOAttributes to modify one or more attribute values of a specified border configuration object; or the NMS requests EMS2 through an operation of createMO to create a specified border configuration object; or the NMS requests EMS2 through an operation of deleteMO to delete one or more specified border configuration objects. The definitions of the operations of setMOAttributes, createMO and deleteMO at the BasicCMIRP are provided in 3GPP 32.602 and will not be given herein.

Fourth, the border configuration object will be changed when the NMS manages bulk data in the EMS through the BulkCMIRP, for example, the NMS downloads a file of bulk data using Download operation, validates(O), pre-activates and activates the file downloaded. The definitions of the downloading, validating(O), pre-activating and activating at the BulkCMIRP are provided in 3GPP 32.612 and will not be given herein.

In Step 403, EMS2 sends to EMS1 the notification of border configuration object change, which carries the changed border configuration information.

In Step 403 above, EMS2 may send different notifications to EMS1 according to different reasons that cause the change of the border configuration object.

For example, with respect to the four operations described in Step 402, notifications at the KernelCMIRP are sent corresponding to the four operations. For example, notifyAttributeValueChange is sent when the attribute values of an object are modified, notifyObjectCreation is sent when an object is created, and notifyObjectDeletion js sent when an object is deleted. The definitions of the notifyAttributeValueChange, notifyObjectCreation and notifyObjectDeletion at the KernelCMIRP are provided in 3GPP 32.662 and will not be given herein.

In Step 404, upon receiving the notification of border configuration object change, EMS1 acquires the changed border configuration information and completes the synchronization of the border configuration information. That is, EMS1 modifies corresponding border configuration information in EMS1 according to the predetermined function relation between the border configuration information of EMS2 and the corresponding border configuration information in EMS1. Thus, the corresponding border configuration information in EMS1 and the changed border configuration information of EMS2 still comply with the predetermined function relation.

According to the embodiments of the present invention, an operator usually adopts devices from different manufacturers in a communication network, and 3GPP standards are utilized to the greatest extent in order to meet the demand of exchanging the network management configuration information between EMSs. 3GPP is the most influential and irreplaceable international standard of 3G, and most of manufacturers produce devices comply with the 3GPP standards, therefore, according to the embodiments of the present invention, it is possible for EMSs from different manufacturers to exchange network management configuration information normally so as to simplify the management and integration of devices for the operator. The operator may choose devices from different manufacturers more flexibly and lower the purchase cost in constructing the network. Furthermore, most of the existing EMS network management products of different manufacturers are based on the 3GPP standards, hence the existing EMS network management products can be still utilized to the greatest extent and thus the development cost of network management products is reduced.

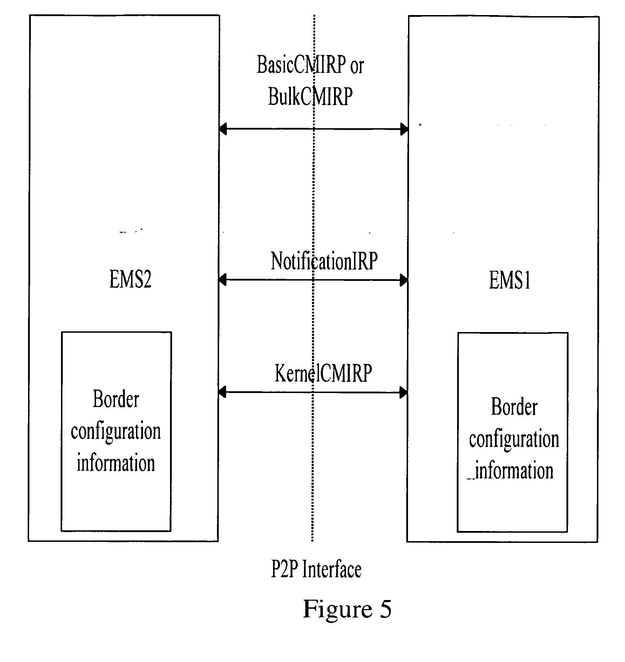

To sum up, the embodiments of the present invention provide a flow of communication interface, referred to as P2P interface herein, used for exchanging network management configuration information between EMSs. In the embodiments, some standard operations defined by 3GPP for some IRPs are adopted. Figure 5 is a schematic diagram illustrating the 3GPP IRP operation according to the embodiments of the present invention. As shown in Figure 5, the P2P interface between EMSs in accordance with the embodiments of the present invention may adopt 3GPP northbound interface specifications. BasicCMIRP, BulkCMIRP, NotificationIRP and KernelCMIRP of the northbound interface can be adopted directly in the flow of communication interface.

The devices invoking the operation functions of various IRPs of the 3GPP northbound interface are IRPManagers, and the devices realizing the operation functions are IRPAgents. Therefore, when an EMS is able to realize the operation functions of the 3GPP northbound interface, the EMS is configured with an IRPAgent. It is only needed to develop an IRPManager invoking the operation functions of the IRPs and add the IRPManager into the EMS so as to achieve the border configuration information synchronization through the P2P interface in accordance with the embodiments of the present invention.

Moreover, the embodiments of the present invention may not use operation specifications of the 3GPP northbound interface. When an EMS is unable to perform the operation functions of the 3GPP northbound interface, the EMS is configured with neither IRPAgent nor IRPManager, therefore, both IRPAgent and IRPManager which utilize the operation functions of the IRPs need to be developed and added into the EMS so as to achieve the border configuration information synchronization through the P2P interface in accordance with the embodiments of the present invention.

## Claims

1. A communication network comprising a first sub-network and a second sub-network, the first sub-network related to the second sub-network, wherein the first sub-network comprises an Element Management System, hereinafter designated as EMS, communicatively connecting with an EMS of a second sub-network, whereby the first sub-network EMS is configured to obtain network management configuration information of the second sub-network EMS from the second sub-network EMS, wherein the network management configuration information is sent by the second sub-network after the network management configuration information of the EMS of the second sub-network changes (204, 302, 403); and the first sub-network EMS is configured to synchronize, after obtaining the network management configuration information of the second sub-network EMS, corresponding network management configuration information in the first sub-network EMS according to the obtained network management configuration information of the second sub-network EMS (205, 303, 404).

2. The network of claim 1, wherein the first sub-network EMS is further configured to learn whether the network management configuration information of the second sub-network EMS changes, and
configured to initiate a request for acquiring specified network management configuration information to the second sub-network EMS if the network management configuration information of the second sub-network changes.

3. The network of claim 2, wherein the first sub-network EMS is configured to determine that the network management configuration information of the second sub-network EMS changes if the corresponding network management configuration information in the first sub-network EMS does not match the network management configuration information of the second sub-network EMS.

4. The network of claim 1, 2 or 3, wherein the first sub-network EMS is further configured to subscribe to a notification of border configuration object change at the second sub-network EMS, wherein the first sub-network EMS obtains the network management configuration information of the second sub-network EMS through the notification.

5. The network of claim 4, wherein the first sub-network EMS does the subscription to the notification by a subscription operation of Notification Integrated Reference Point, hereinafter designated as IRP, of 3GPP northbound interface, and the notification is a notification of configuration information synchronization recommended at a kernel configuration management IRP of the 3GPP northbound interface.

6. The network of one of the claims 1 to 5, wherein the first sub-network EMS is configured to invoke an operation of getting managed object attributes at a basic configuration management Integrated Reference Point, hereinafter designated as IRP, of 3GPP northbound interface to send a querying request to the second sub-network EMS for an attribute of an object corresponding to the specified network management configuration information to initiate the acquiring specified network management configuration information and the first sub-network EMS acquires the specified network management configuration information from an output parameter of the operation of getting managed object attributes.

7. The network of one of the claims 1 to 6, wherein the first sub-network EMS is configured to invoke an upload operation at a bulk configuration management Integrated Reference Point, hereinafter designated as IRP, of 3GPP northbound interface to request the second sub-network EMS to create a file containing the specified network management configuration information so as to initiate the acquiring the specified network management configuration information; and the first sub-network EMS is configured to receive the file sent by the second sub-network EMS through a file transfer protocol upon creating by the second sub-network EMS the file and the first sub-network EMS acquires the specified network management configuration information from the received file.

8. The network of one of the claims 1 to 7, wherein the first sub-network EMS is further configured to subscribe to a notification of border configuration object change at the EMS of the related sub-network, and the sub-network EMS acquires the network management configuration information of the second sub-network EMS through the notification.

## Patentansprüche

1. Kommunikationsnetz, das ein erstes Teilnetz und ein zweites Teilnetz umfasst, wobei das erste Teilnetz mit dem zweiten Teilnetz in Beziehung steht, wobei das erste Teilnetz ein im Folgenden als EMS bezeichnetes Element Management System umfasst, das sich kommunikativ mit einem EMS eines zweiten Teilnetzes verbindet, wobei das EMS des ersten Teilnetzes dafür ausgelegt ist, Netzverwaltungs-Konfigurationsinformationen des EMS des zweiten Teilnetzes von dem EMS des zweiten Teilnetzes zu erhalten, wobei die Netzverwaltungs-Konfigurationsinformationen durch das zweite Teilnetz gesendet werden, nachdem sich die Netzverwaltungs-Konfigurationsinformationen des EMS des zweiten Teilnetzes ändern (204, 302, 403); und das EMS des ersten Teilnetzes dafür ausgelegt ist, nach dem Erhalten der Netzverwaltungs-Konfigurationsinformationen des EMS des zweiten Teilnetzes entsprechende Netzverwaltungs-Konfigurationsinformationen in dem EMS des ersten Teilnetzes gemäß den erhaltenen Netzverwaltungs-Konfigurationsinformationen des EMS des zweiten Teilnetzes zu synchronisieren (205, 303, 404).

2. Netz nach Anspruch 1, wobei das EMS des ersten Teilnetzes ferner dafür ausgelegt ist zu erfahren, ob sich die Netzverwaltungs-Konfigurationsinformationen des EMS des zweiten Teilnetzes ändern, und
dafür ausgelegt ist, eine Anforderung zum Beschaffen von spezifizierten Netzverwaltungs-Konfigurationsinformationen zu dem EMS des zweiten Teilnetzes einzuleiten, wenn sich die Netzverwaltungs-Konfigurationsinformationen des zweiten Teilnetzes ändern.

3. Netz nach Anspruch 2, wobei das EMS des ersten Teilnetzes dafür ausgelegt ist zu bestimmen, dass sich die Netzverwaltungs-Konfigurationsinformationen des EMS des zweiten Teilnetzes ändern, wenn die entsprechenden Netzverwaltungs-Konfigurationsinformationen in dem EMS des ersten Teilnetzes nicht mit den Netzverwaltungs-Konfigurationsinformationen des EMS des zweiten Teilnetzes übereinstimmen.

4. Netz nach Anspruch 1, 2 oder 3, wobei das EMS des ersten Teilnetzes ferner dafür ausgelegt ist, eine Benachrichtigung von Grenzkonfigurationsobjektänderung in dem EMS des zweiten Teilnetzes zu subskribieren, wobei das EMS des ersten Teilnetzes die Netzverwaltungs-Konfigurationsinformationen des EMS des zweiten Teilnetzes durch die Benachrichtigung erhält.

5. Netz nach Anspruch 4, wobei das EMS des ersten Teilnetzes die Subskription der Benachrichtigung durch eine Subskriptionsoperation des im Folgenden als IRP bezeichneten Integrated Reference Point der Benachrichtigung der 3GPP-Northbound-Schnittstelle durchführt und die Benachrichtigung eine Benachrichtigung von Konfigurationsinformationssynchronisation ist, die in einem Kernel-Konfigurationsverwaltungs-IRP der 3GPP-Northbound-Schnittstelle empfohlen wird.

6. Netz nach einem der Ansprüche 1 bis 5, wobei das EMS des ersten Teilnetzes dafür ausgelegt ist, eine Operation des Erhaltens von verwalteten Objektattributen in einem im Folgenden als IRP bezeichneten Integrated Reference Point der Grundkonfigurationsverwaltung der 3GPP-Northbound-Schnittstelle aufzurufen, um eine Abfrageanforderung zu dem EMS des zweiten Teilnetzes nach einem Attribut eines Objekts zu senden, das den spezifizierten Netzverwaltungs-Konfigurationsinformationen entspricht, um das Beschaffen von spezifizierten Netzverwaltungs-Konfigurationsinformationen einzuleiten, und das EMS des ersten Teilnetzes die spezifizierten Netzverwaltungs-Konfigurationsinformationen aus einem Ausgangsparameter der Operation des Erhaltens von verwalteten Objektattributen beschafft.

7. Netz nach einem der Ansprüche 1 bis 6, wobei das EMS des ersten Teilnetzes dafür ausgelegt ist, eine Upload-Operation in einem im Folgenden als IRP bezeichneten Integrated Reference Point der Bulk-Konfigurationsverwaltung der 3GPP-Northbound-Schnittstelle aufzurufen, um von dem EMS des zweiten Teilnetzes anzufordern, eine Datei zu erzeugen, die die spezifizierten Netzverwaltungs-Konfigurationsinformationen enthält, um so das Beschaffen der spezifizierten Netzverwaltungs-Konfigurationsinformationen einzuleiten; und das EMS des ersten Teilnetzes dafür ausgelegt ist, die durch das EMS des zweiten Teilnetzes gesendete Datei durch ein Dateitransferprotokoll zu empfangen, wenn das EMS des zweiten Teilnetzes die Datei erzeugt hat, und das EMS des ersten Teilnetzes die spezifizierten Netzverwaltungs-Konfigurationsinformationen aus der empfangenen Datei beschafft.

8. Netz nach einem der Ansprüche 1 bis 7, wobei das EMS des ersten Teilnetzes ferner dafür ausgelegt ist, eine Benachrichtigung von Grenzkonfigurationsobjektänderung in dem EMS des betreffenden Teilnetzes zu subskribieren und das EMS des Teilnetzes die Netzverwaltungs-Konfigurationsinformationen des EMS des zweiten Teilnetzes durch die Benachrichtigung beschafft.

## Revendications

1. Réseau de communication comprenant un premier sous-réseau et un second sous-réseau, le premier sous-réseau étant associé au second sous-réseau, dans lequel le premier sous-réseau comprend un Système de Gestion d'Elément, désigné ci-après par EMS, se connectant par communication avec un EMS d'un second sous-réseau, l'EMS du premier sous-réseau étant configuré pour obtenir des informations de configuration de gestion de réseau de l'EMS du second sous-réseau à partir de l'EMS du second sous-réseau, les informations de configuration de gestion de réseau étant envoyées par le second sous-réseau après un changement des informations de configuration de gestion de réseau de l'EMS du second sous-réseau (204, 302, 403) et l'EMS du premier sous-réseau est configuré pour synchroniser, après l'obtention des informations de configuration de gestion de réseau de l'EMS du second sous-réseau, des informations de configuration de gestion de réseau correspondantes dans l'EMS du premier sous-réseau en fonction des informations de configuration de gestion de réseau obtenues de l'EMS du second sous-réseau (205, 303, 404).

2. Réseau selon la revendication 1, dans lequel l'EMS du premier sous-réseau est configuré en outre pour apprendre si les informations de configuration de gestion de réseau de l'EMS du second sous-réseau changent ou non, et
configuré pour lancer une demande d'acquisition d'informations de configuration de gestion de réseau spécifiées auprès de l'EMS du second sous-réseau si les informations de configuration de gestion de réseau du second sous-réseau changent.

3. Réseau selon la revendication 2, dans lequel l'EMS du premier sous-réseau est configuré pour déterminer que les informations de configuration de gestion de réseau de l'EMS du second sous-réseau changent si les informations de configuration de gestion de réseau correspondantes dans l'EMS du premier sous-réseau ne correspondent pas aux informations de configuration de gestion de réseau de l'EMS du second sous-réseau.

4. Réseau selon la revendication 1, 2 ou 3, dans lequel l'EMS du premier sous-réseau est configuré en outre pour souscrire à une notification de changement d'objet de configuration de frontière au niveau de l'EMS du second sous-réseau, l'EMS du premier sous-réseau obtenant les informations de configuration de gestion de réseau de l'EMS du second sous-réseau par le biais de la notification.

5. Réseau selon la revendication 4, dans lequel l'EMS du premier sous-réseau effectue la souscription à la notification par une opération de souscription de Point de Référence Intégré de Notification, désigné ci-après par IRP, d'une interface Northbound 3GPP, et la notification est une notification de synchronisation d'informations de configuration recommandée au niveau d'un IRP de gestion de configuration de noyau de l'interface Northbound 3GPP.

6. Réseau selon l'une quelconque des revendications 1 à 5, dans lequel l'EMS du premier sous-réseau est configuré pour solliciter une opération d'obtention d'attributs d'objet géré au niveau d'un Point de Référence Intégré de gestion de configuration de base, désigné ci-après par IRP, de l'interface Northbound 3GPP pour envoyer une demande d'interrogation à l'EMS du second sous-réseau à la recherche d'un attribut d'un objet correspondant aux informations de configuration de gestion de réseau spécifiées afin de lancer l'acquisition des informations de configuration de gestion de réseau spécifiées et l'EMS du premier sous-réseau acquiert les informations de configuration de gestion de réseau spécifiées à partir d'un paramètre de sortie de l'opération d'obtention d'attributs d'objet géré.

7. Réseau selon l'une des revendications 1 à 6, dans lequel l'EMS du premier sous-réseau est configuré pour solliciter une opération de chargement amont au niveau d'un Point de Référence Intégré de gestion de configuration globale, désigné ci-après par IRP, de l'interface Northbound 3GPP pour demander à l'EMS du second sous-réseau de créer un fichier contenant les informations de configuration de gestion de réseau spécifiées de façon à lancer l'acquisition des informations de configuration de gestion de réseau spécifiées ; et l'EMS du premier sous-réseau est configuré pour recevoir le fichier envoyé par l'EMS du second sous-réseau par le biais d'un protocole de transfert de fichier à la création par l'EMS du second sous-réseau du fichier et l'EMS du premier sous-réseau acquiert les informations de configuration de gestion de réseau spécifiées à partir du fichier reçu.

8. Réseau selon l'une des revendications 1 à 7, dans lequel l'EMS du premier sous-réseau est configuré en outre pour souscrire à une notification de changement d'objet de configuration de frontière au niveau de l'EMS du sous-réseau associé, et l'EMS de sous-réseau acquiert les informations de configuration de gestion de réseau de l'EMS du second sous-réseau par le biais de la notification.
